Europäisches Patentamt

(19) European Patent Office

Office européen des brevets

(11) Publication number: **0 047 142**
**B1**

(12) **EUROPEAN PATENT SPECIFICATION**

(45) Date of publication of patent specification: **25.07.84**

(21) Application number: **81303926.0**

(22) Date of filing: **27.08.81**

(51) Int. Cl.³: **A 23 K 1/18, A 23 K 1/20**

(54) Method of feeding ruminants.

(30) Priority: **30.08.80 GB 8028098**

(43) Date of publication of application:
**10.03.82 Bulletin 82/10**

(45) Publication of the grant of the patent:
**25.07.84 Bulletin 84/30**

(84) Designated Contracting States:
**CH DE FR GB LI NL**

(56) References cited:
**DE - B - 2 521 217**
**GB - A - 1 492 824**
**US - A - 4 034 120**
**US - A - 4 073 960**

(73) Proprietor: **BP NUTRITION (UK) LIMITED**
**Stepfield Witham**
**Essex, CM8 3AB (GB)**

(72) Inventor: **Meggison, Paul Anthony BP Nutrition (UK) Limited**
**Minsal Works Wincham**
**Northwich Cheshire, CW9 6DF (GB)**
Inventor: **Perry, Federick George BP Nutrition (UK) Limited**
**Stepfield Witham**
**Essex, CM8 3AB (GB)**

(74) Representative: **Eastman, Hugh Leonard et al,**
**c/o The British Petroleum Company plc Patents Division Chertsey Road**
**Sunbury-on-Thames Middlesex TW16 7LN (GB)**

Courier Press, Leamington Spa, England.

# 0 047 142

**Description**

This invention relates to animal feeds containing fat and to their use for feeding ruminants.

Fat premixes are known for adding fat to the diet of animals. They are formed by mixing fat with particles of an inert, high surface area material such as vermiculite. Up to 50% or more of fat can be mixed with such a material without it becoming greasy or ceasing to be a free-flowing particulate solid.

Normally the fats used for animal feeding are crude fats such as unrefined tallow, plant oils and by-products from either the soap makers or chemical manufacturers. These fats have largely been added direct to feeds, but in recent times following the development of fat premixes, large quantities have been added by fat premixing on to carriers, such as finely ground cereal by-products. In the early nineteen seventies the use of inert mineral carriers became widespread in the manufacture of fat premixes. The developent of fat premixes has taken place mainly to increase the use of fat at those mineral feed factories which do not have fat tanks to handle liquid fats, as well as allowing the use of fats in rations prepared on the farm, i.e. home mixing. This has been particularly useful in the case of preparing high nutrient density diets for pigs and poultry.

Another development has been the use of fat premixes to provide specialised fats for specific livestock purposes. This has been particularly useful in poultry feeds. The fat premix has been used to carry fats rich in linoleic acid, to boost the level in the final poultry feed instead of a more general purpose fat, such as tallow.

Finally, US Patent No. 4034120 discloses that a vermiculite-fat mixture is useful as a pelletising aid for fibrous agricultural animal feed materials (e.g. beet pulp, bagasse and straw).

These vermiculite-fat premixes have not, however, been considered suitable for feeding to ruminants. Normally when fats are fed to ruminants, particularly unsaturated fats, these are extensively metabolised in the rumen.

In fact, it has been assumed that fat for feeding to ruminants needs some form of chemical protection and, in a recent development, fat for feeding to ruminants has been encapsulated in protected protein (e.g. protein treated with formaldehyde) so that both the protein and the fat are prevented from being metabolised in the rumen.

Protection by chemical methods has run into difficulties, however, because an adequate chemical treatment to prevent metabolism in the rumen has been found to lower the digestibility in the remainder of the system. A chemically-protected fat has recently been withdrawn from the market, leaving a gap which animal feed producers are anxious to fill.

One principal objective of feeding fat to ruminants is to increase the fat content of the milk of the ruminant and particularly to increase the content of the softer, polyunsaturated fats. Butter produced from milk with a high polyunsaturated fat content is softer, easier to spread and hence more acceptable to consumers.

It has now been found that fat in the form of fat premixes are metabolised only to a limited extent in the rumen of a ruminant.

Equally importantly, it has been found that fat protected in the rumen in this way is nonetheless digested in the lower intestine and increases the fat content of the milk of the ruminant.

Vermiculite is a laminar material which can be exfoliated, the exfoliation occurring at right angles to the cleavage planes causing the original laminar particles to expand into concertina-shaped granules. It is assumed that the fat is able to penetrate into the exfoliated structure and that, once within the structure, it is sufficiently physically protected by the mineral itself to pass through the rumen unchanged. It is, however, not too well protected to give problems of subsequent digestion. It will be appreciated that getting the right balance between protection in the rumen and subsequent digestion is a delicate matter and it is considered surprising and unpredictable that fat premixes have this balance.

This discovery gives the possibility of feeding fats to ruminants, without the need for chemical protection.

High levels of fat, particularly polyunsaturated fats, can be included in the diet of ruminants without adversely affecting palatability.

According to the present invention therefore a method of feeding ruminants to alter their milk fat or body fat composition comprises feeding to the ruminants a fat premix of one or more fats intimately admixed with particles of an inert mineral having a porous structure.

The inert mineral is preferably exfoliated vermiculite but other suitable materials may be pumice and porous clays. The fat content may be up to 70% wt of the total premix without the particles losing their free-flowing, non-greasy qualities. Since the inert mineral has no nutrient qualities the fat content is desirably as high as possible consistent with it being adsorbed and protected in the rumen. A low fat content may make the fat too inaccessible and slow down digestion. Preferred limits are thus 10—70% weight, and more particularly 30—60% weight.

The fats are preferably liquid at animal body temperatures and more particularly liquid at ambient temperature. As indicated above, the fats are also preferably polyunsaturated fats, the term including fat in any chemical form, including fatty acids.

Particularly preferred oils are thus soya oil, sunflower oil, linseed oil, cotton seed oil, corn oil, marine oils, manufactured mixtures of such oils, or fatty acid oils derived from such oils.

2

It is to be understood that most fats consist of a mixture of compounds of differing molecular weight and chemical composition. The terms "polyunsaturated fats" and "fatty acids" therefore include mixtures containing at least 50% weight of such materials.

The fat and inert mineral may be admixed in conventional manner as is known for the preparation of premixes fed to non-ruminants. Thus a normally liquid fat and vermiculite may be simply admixed and the fat will naturally be adsorbed into the mineral. With normally solid fats the fat may be heated to above its melting point before admixtures.

The premixes may be fed to any ruminants (e.g. cattle, sheep and goats) but the premixes are particularly suitable for feeding to cattle to give milk or meat having an increased content of poly unsaturated fat.

The premixes may be fed to ruminants in quanities of up to 15% wt of the complete diet but should preferably not exceed 5 Kg of the fat premix/day for cattle.

The invention is illustrated by the following examples.

## Example 1

The "Dacron" (Registered Trade Mark) bag technique was used to determine the degree of fat protection in the rumen of three different fat premixes. These were:

(1) Dairy fat premix

The premix formulation and composition of the fat was as follows:

| Premix formulation | | Fat composition | |
|---|---|---|---|
| Fat | 49.5% | Free fatty acids | 70% |
| Vermiculite | 28.0% | Saturated acids | 65% |
| Cereal by-products | 22.5% | Unsaturated acids | 35% |
| | | Melting point | 40°C |

(2) Non-dairy fat premix.

The premix formulation and composition of the fat was as follows:

| Premix formulation | | Fat composition | |
|---|---|---|---|
| Fat | 49.5% | Free fatty acids | 45% |
| Vermiculite | 28.0% | Saturated acids | 40% |
| Cereal by-products | 22.5% | Unsaturated acids | 60% |
| | | Melting point | 37°C |

(3) 50% fat/50% vermiculite premix.

The premix formulation and composition of the fat was as follows:

| Premix formulation | | Fat composition | |
|---|---|---|---|
| Fat | 50% wt | As for premix (2) | |
| Vermiculite | 50% wt. | | |

All the premixes were prepared by mixing the solids with liquid fat at 55°C.

Three rumen fistulated sheep were used to determine the disappearance of fat "Dacron" bags suspended in their rumens. At the time of the trials the sheep were consuming 1 Kg of fresh material per day, consisting of 400 g of rolled barley, 200 g sugar beet pulp and 400 g chopped hay.

Samples of the fats were placed in the bags, the size of samples and number of tests being shown in Table 1.

TABLE 1

|  | Sample Size | No. of Tests |
|---|---|---|
| Dairy Fat Premix | 5 g | 2 |
| Non-Dairy Fat Premix | 5 g | 2 |
| 50% Fat/50% Vermiculite | 10 g | 1 |

For each test five bags were placed into the rumen of each sheep after the a.m. feed. One bag was withdrawn after 2, 4, 8, 12 and 24 hours. Following removal from the rumen the bags were washed in cold water and stored in a refrigerator overnight, then dried at 60°C for 48 hours.

The starting materials were analysed for fat content, as were the samples withdrawn from the rumen. The loss of fat was calculated as:

$$\frac{\text{\% fat in original sample} - \text{\% fat in sample withdrawn from rumen}}{\text{\% fat in original sample}} \times 100$$

and is shown in Table 2 below.

TABLE 2
Mean Figures for Animals of Fat Disappearance

Incubation Time, Hours

|  | 2 | 2 | 8 | 12 | 24 |
|---|---|---|---|---|---|
| % fat lost |  |  |  |  |  |
| Dairy Fat Premix | 23.4 | 33.0 | 44.8 | 51.1 | 62.3 |
| Non-Dairy Fat Premix | 16.9 | 19.6 | 24.5 | 23.5 | 31.8 |
| 50% Fat/50% Vermiculite Premix | 6.2 | 8.6 | 13.1 | 13.6 | 20.3 |

Table 2 shows that the fat in the Dairy Farm Premix is only poorly protected. The more unsaturated fat in the Non-Dairy Fat Premix is better protected. The best protection is obtained, however, when when the vermiculite content of the premix is increased from 28 to 50%, indicating that the vermiculite is contributing significantly to the protection of the fat in the rumen.

Example 2

The effect of feeding fat to milk cows was determined in a series of tests. Three groups of cows were used:—
(1) Control group — no added fat in their diet.
(2) Group fed 12% tallow directly (i.e. not in premix).
(3) Group fed 12% tallow and 5% vermiculite in the form of a tallow/vermiculite premix.
Each group consisted of three Friesian cows.

Each group was fed the same amount of roughage (silage) and concentrate (barley, soya bean meal and fat) per day, the variation being in the amount and type of fat in the concentrate as indicated above.

The milk yields of each group were measured as was the fat and protein content of the milk. The data for the second and third weeks of the trial are shown in Table 3 below, the figures being the mean value for each group of three cows.

# 0 047 142

## TABLE 3

### Effects of Adding Fat, Either Direct or with Vermiculite, on Milk yield and Quality

| Milk | Milk Yield kg/day | Fat % | Protein % | Intake | |
|---|---|---|---|---|---|
| | | | | Roughage % | Concentrate kg/day |
| **Data for Second Week** | | | | | |
| Control | 22.9 | 3.63 | 3.11 | 6.60 | 11.80 |
| 12% Tallow | 22.6 | 3.72 | 3.06 | 6.41 | 11.95 |
| 12% Fat + 5% Vermiculite | 21.9 | 4.61 | 3.07 | 6.57 | 11.96 |
| **Data for Third Week** | | | | | |
| Control | 21.4 | 3.55 | 3.19 | 6.75 | 11.95 |
| 12% Tallow | 23.5 | 3.18 | 3.07 | 6.45 | 11.97 |
| 12% Fat + 5% Vermiculite | 22.6 | 3.91 | 3.09 | 6.58 | 11.90 |

Table 3 shows that adding tallow to the cows' feed had little or no effect on the fat content of the milk. The tallow was not protected against the metabolism in the rumen and was, presumably, largely metalbolised there.

When the cows were fed a tallow/vermiculite mix however, the fat content of the milk increased significantly. This fat increase was obtained without a significant change in the protein content of the milk or the overall milk yield.

### Example 3

A soya oil having a fatty acid content of 95.6% and an unsaturated acid content of 81.5% was mixed with vermiculite to give a premix formulation of:

Fat 50% wt.

Vermiculite 50% wt.

The premix was prepared by simple mixing of the liquid oil with the vermiculite. The premix was used to examine the effect of feeding the premix to lactating cows, particularly the effect on the percentage of milk fat and fatty acid content of the milk.

Friesian cows in their fifth month of lactation were fed long hay and concentrates, the latter fed as a meal.

The ratio of hay to concentrates was 1/3 hay / 2/3 concentrates, fed according to their milk yield. The average intake was 12 kg per day.

The cows were fed in this way for 12 days as a control feeding period.

Samples of milk were taken during the control feeding period and analysis for butterfat levels and its fatty acid composition took place.

The polyunsaturated fat premix was then mixed into the concentrate and gradually increased in concentration over two weeks so that at the end of this period the cows were receiving 400 g of fat per day from the supplement.

Samples of milk were taken after 4 days feeding at the 400 g of fat per day level and analysed as above. The results are shown below:

5

| Fatty Acids of Fat Used | | Fatty Acid Composition of Milk Fat | |
| --- | --- | --- | --- |
| | | Control | Experimental |
| Palmitic ($C_{16}$) | 10.9 | 25.6 | 21.6 |
| Stearic ($C_{18}$) | 3.2 | 9.2 | 12.7 |
| Oleic ($C_{18.1}$) | 21.8 | 21.3 | 28.9 |
| Linoleic ($C_{18.2}$) | 54.1 | 2.3 | 6.7 |
| Linolenic ($C_{18.3}$) | 5.6 | 1.1 | 1.4 |
| Milk Fat % | — | 3.8 | 4.1 |

It can be seen that when the cows were fed with 400 g/day of fat in the form of a fatty soya oil/vermiculite premix milk fat percentage of the milk increased from 3.8% to 4.1%. At the same time the content of polyunsaturated acids in the milk fat increased from 24.7 to 37.0 with substantially no change in the saturated fatty acid content.

**Claims**

1. A method of feeding ruminants to alter their milk fat or body fat composition comprising feeding to the ruminants a fat premix of one or more fats intimately admixed with particles of an inert mineral having a porous structure.

2. A method as claimed in claim 1 wherein the inert mineral is exfoliated vermiculite.

3. A method as claimed in claim 1 or 2 wherein the premix contains from 10 to 70% wt of fat.

4. A method as claimed in claim 3 wherein the premix contains from 30 to 60% wt of fat.

5. A method as claimed in any of claims 1 to 4 wherein the fat is liquid animal body temperature.

6. A method as claimed in claim 5 wherein the fat is polyunsaturated fat.

7. A method as claimed in claim 6 wherein the polyunsaturated fat is soya oil, sunflower oil, linseed oil, cotton seed oil, corn oil, a marine oil, mixtures thereof or fatty acid oils derived from such oils.

8. A method as claimed in any of claims 1 to 7 wherein the premix comprises up to 15% wt of the complete diet.

**Patentansprüche**

1. Verfahren zum Füttern von Wiederkäuern zur Änderung der Zusammensetzung ihres Milchfettes bzw. Körperfettes, dadurch gekennzeichnet, daß die Wiederkäuer mit einer Fett-Vormischung aus einem oder mehreren Fetten in innigem Gemisch mit Teilchen eines inerten Minerals mit poröser Struktur gefüttert werden.

2. Verfahren nach Anspruch 1, dadurch gekennzeichnet, daß das inerte Material blättchenförmiger Vermikulit ist.

3. Verfahren nach Anspruch 1 oder 2, dadurch gekennzeichnet, daß die Vormischung 10 bis 70 Gew.-% Fett enthält.

4. Verfahren nach Anspruch 3, dadurch gekennzeichnet, daß die Vormischung 30 bis 60 Gew.-% Fett enthält.

5. Verfahren nach irgendeinem der Ansprüche 1 bis 4, dadurch gekennzeichnet, daß das Fett bei der Körpertemperatur des Tieres flüssig ist.

6. Verfahren nach Anspruch 5, dadurch gekennzeichnet, daß das Fett ein mehrfach ungesättigtes Fett ist.

7. Verfahren nach Anspruch 6, dadurch gekennzeichnet, daß das mehrfach ungesättigte Fett Sojaöl, Sonnenblumenöl, Leinöl, Baumwollsamenöl, Maisöl, ien marines Öl, Gemische dieser Öle oder aus ihnen abgeleitete Fettsäure-Öle ist.

8. Verfahren nach irgendeinem der Ansprüche 1 bis 7, dadurch gekennzeichnet, daß die Vormischung bis zu 15 Gew.-% der gesamten Nahrung umfaßt.

**Revendications**

1. Méthode pour l'affouragement de ruminants, destinée à modifier la composition des matières grasses de leur lait ou des matières grasses de leur corps, constituant à alimenter les ruminants à l'aide d'un prémélange d'une ou de plusieurs matières grasses intimement mélangées à des particules d'un minéral inerte ayant une structure poreuse.

2. Méthode selon la revendication 1, dans laquelle le minéral inerte des de la vermiculite exfoliée.

3. Méthode selon l'une des revendications 1 et 2, dans laquelle le prémélange contient de 10 à 70% en poids de matières grasses.

4. Méthode selon la revendication 3, dans laquelle le prémélange contient de 30 à 60% en poids de matières grasses.

5. Méthode selon l'une des revendications 1 à 4, dans laquelle les matières grasses sont liquides à la température du corps de l'animal.

6. Méthode selon la revendication 5, dans laquelle les matières grasses sont des matières grasses poly-insaturées.

7. Méthode selon la revendication 6, dans laquelle les matières grasses polyinsaturées sont de l'huile de soja, de l'huile de tournesol, de l'huile de lin, de l'huile de graines de coton, de l'huile de maïs, une huile marine, des mélanges de celles-ci ou des huiles d'acides gras dérivées de ces huiles.

8. Méthode selon l'une des revendications 1 à 7, dans laquelle le prémélange comprend jusqu'à 15% de la nourriture complète.